# EUROPÄISCHE PATENTANMELDUNG

(11) **EP 3 683 456 A1**
(43) Veröffentlichungstag der Anmeldung: **22.07.2020**
(21) Anmeldenummer: 20150429.7
(22) Anmeldetag: 07.01.2020
(51) Int. Cl.: F16B 13/06

(54) **SPREIZANKER**

(30) Priorität: 21.01.2019 DE 102019101365
(71) Anmelder: fischerwerke GmbH & Co. KG, 72178 Waldachtal (DE)
(72) Erfinder: Linka, Martin, 72160 Horb a.N. (DE); Hirschle, Tobias, 71131 Jettingen (DE); Schäuffele, Jürgen, 72178 Waldachtal (DE); Echle, Benjamin, 77776 Schapbach (DE); Schiemann, Thorben, 31688 Nienstädt (DE)
(74) Vertreter: Suchy, Ulrich Johannes

(57) **Zusammenfassung**

Um einen Spreizanker (1) bei einer Überkopfmontage vor einem Aufspreizen seiner Spreizhülse (4) in einem senkrecht nach oben gehenden Ankerloch zu halten, schlägt die Erfindung einen beispielsweise kegelförmigen Bremsschuh (11) aus einem Elastomer in einer Aussparung (10) der Spreizhülse (4) vor, der auch einen Ankerschaft (2) gegen Mitdrehen beim Aufspreizen der Spreizhülse (4) hält. Der Bremsschuh (11) ermöglicht ein leichtes Einbringen des Spreizankers (1) in ein Ankerloch von Hand.

## Beschreibung

Die Erfindung betrifft einen Spreizanker mit den Merkmalen des Oberbegriffs des Anspruchs 1.

Spreizanker sind üblicherweise stabförmig mit einer im Wesentlichen zylindrischen Grundform und dienen einer Befestigung eines Gegenstands auf einem Boden, an einer Wand oder dergleichen. Sie werden durch Aufspreizen einer Spreizhülse in einem Ankerloch befestigt, was als Verankerung bezeichnet wird. Das Ankerloch ist ein normalerweise gebohrtes, zylindrisches Sackloch in einem Ankergrund aus beispielsweise Mauerwerk, Stein oder Beton.

Aufgabe der Erfindung ist, einen Spreizanker der vorstehend erläuterten Art vorzuschlagen, der bei einer Überkopfmontage vor Aufspreizen seiner Spreizhülse gegen sein eigenes Gewicht in einem Ankerloch hält, der einer Drehung eines Ankerschafts des Spreizdübels in einem Ankerloch entgegenwirkt, wenn beim Aufspreizen der Spreizhülse ein Drehmoment auf den Ankerschaft wirkt, und der sich von Hand in ein Ankerloch einbringen lässt. "Überkopfmontage" meint eine Verankerung in einem vertikal nach oben orientierten Ankerloch, beispielsweise in einer Decke.

Diese Aufgabe wird erfindungsgemäß durch einen Spreizanker mit den Merkmalen des Anspruchs 1 gelöst. Der erfindungsgemäße Spreizanker weist einen Ankerschaft, einen Spreizkörper und eine Spreizhülse auf. Der Ankerschaft ist insbesondere stabförmig und der Spreizkörper kann einstückig mit dem Ankerschaft oder starr mit dem Ankerschaft verbunden sein. Möglich ist auch eine Schraubverbindung zwischen dem Ankerschaft und dem Spreizkörper. Der Spreizkörper ist vorzugsweise kegelstumpfförmig oder weist jedenfalls einen kegelstumpfförmigen Abschnitt zum Aufspreizen der Spreizhülse auf. Möglich sind auch andere Formen, der Spreizkörper kann beispielsweise auch pyramidenstumpfförmig oder keilförmig sein. Auch beispielsweise eine Ringstufe oder eine gewölbte Fläche ist als Spreizkörper zum Aufspreizen der Spreizhülse möglich.

Die Spreizhülse ist zumindest in einem Spreizbereich radial aufweitbar, wofür sie vorzugsweise einen durchgehenden Längsschlitz und/oder einen oder mehrere nicht durchgehende Längsschlitze aufweist. "Längsschlitz" bedeutet einen Verlauf der Schlitze in einer Längsrichtung der Spreizhülse bzw. des Spreizankers, was einen beispielsweise zick-zack-, wellen- oder wendelförmigen Verlauf, also einen Verlauf der Längsschlitze mit einer Komponente in der Längsrichtung und einer Komponente in einer Umfangsrichtung der Spreizhülse einschließt. Durch Einziehen des Spreizkörpers in die Spreizhülse oder Aufschieben der Spreizhülse auf den Spreizkörper wird die Spreizhülse aufgeweitet, was auch als "Aufspreizen" oder "Verspreizen" bezeichnet wird. Durch Aufspreizen bzw. Verspreizen der Spreizhülse in einem Ankerloch lässt sich der Spreizanker im Ankerloch befestigen, was als "Verankerung" bezeichnet wird.

Erfindungsgemäß weist die Spreizhülse eine Aussparung auf, in die von innen ein Bremsschuh eingesetzt ist, der bereits im unverspreizten Zustand nach außen über die Spreizhülse übersteht. Die Aussparung ist insbesondere ein kreisförmiges Loch, das sich radial zur Längsachse des Spreizankers erstreckt. Es können auch mehrere Bremsschuhe in Umfangs- und/oder in Längsrichtung der Spreizhülse verteilt vorhanden sein. "Innen" bedeutet eine dem Ankerschaft zugewandte Innenseite oder Innenumfangsfläche der Spreizhülse. Der Bremsschuh wird insbesondere von innen in die Aussparung der Spreizhülse eingesetzt, bevor die Spreizhülse auf dem Ankerschaft angeordnet wird. "Außen" bedeutet eine dem Ankerschaft abgewandte Außenseite oder Außenumfangsfläche der Spreizhülse. Der von innen in die Aussparung der Spreizhülse eingesetzte Bremsschuh steht nach außen über die Spreizhülse über und liegt an einer Lochwand eines Ankerlochs an, wenn der erfindungsgemäße Spreizanker mit der Spreizhülse in ein Ankerloch eingebracht ist, und hält den Spreizanker klemmend im Ankerloch, wenn die Spreizhülse nicht aufgespreizt ist bzw. bis die Spreizhülse aufgespreizt wird und den Spreizanker im Ankerloch verankert. Der Bremsschuh ist ein Element, das - wenn der Spreizanker mit der Spreizhülse in ein Ankerloch eingebracht ist - durch seine Anlage an einer Lochwand eines Ankerlochs durch Kraftschluss (Reibung) und/oder Formschluss mit der Lochwand den Spreizanker gegen sein eigenes Gewicht in dem Ankerloch hält, wenn die Spreizhülse nicht aufgespreizt ist. Das gilt auch in einem vertikal nach oben orientierten Ankerloch.

Vorzugsweise hält der Ankerschaft den Bremsschuh von innen in der Aussparung der auf dem Ankerschaft angeordneten Spreizhülse, damit der Bremsschuh nicht nach innen aus der Aussparung herausfällt. In einem Ankerloch liegt der Bremsschuh insbesondere innen am Ankerschaft und außen an einer Lochwand des Ankerlochs an. Dadurch hält er nicht nur den Spreizanker im Ankerloch, sondern übt auch eine Reibkraft auf den Ankerschaft aus, die einer Drehung des Ankerschafts entgegenwirkt. Dadurch wird der Ankerschaft gegen Drehung gehalten, wenn beispielsweise eine Mutter auf einem Gewinde des Ankerschafts gedreht wird, um über den Ankerschaft den Spreizkörper des Spreizankers in die Spreizhülse einzuziehen und die Spreizhülse aufzuspreizen. Die Erfindung ist allerdings auch für Spreizanker anwendbar, bei denen der Spreizkörper durch ein Gewinde mit dem Ankerschaft verbunden und durch eine Drehung des Ankerschafts in die Spreizhülse eingezogen wird. Bei solchen Ausführungen der Erfindung ist die Wirkung des Bremsschuhs als Drehbremse für den Ankerschaft nicht von Bedeutung.

Damit der Bremsschuh nicht nach außen aus der Aussparung der Spreizhülse heraus fällt, wenn sich die Spreizhülse (noch) nicht in einem Ankerloch befindet, hintergreift der Bremsschuh bei einer bevorzugten Ausgestaltungsform des erfindungsgemäßen Spreizankers einen Rand der Spreizhülse von innen. Der Hintergriff des Bremsschuhs von innen am Rand der Aussparung der Spreizhülse hält den Bremsschuh so, dass er nicht nach außen aus der Aussparung der Spreizhülse heraus fallen kann. Der Bremsschuh kann mit oder ohne Spiel in der Aussparung gehalten sein. In einer Umfangsrichtung und/oder einer Längsrichtung hält die Aussparung der Spreizhülse den Bremsschuh, wobei in einer oder in beiden Richtungen eine Bewegungsmöglichkeit des Bremsschuhs in Bezug auf die Spreizhülse vorhanden sein kann, allerdings nicht sein muss.

Die Erfindung ermöglicht Ausführungen, bei denen der Bremsschuh eine große Beweglichkeit an seiner dem Ankerschaft abgewandten und einer Lochwand eines Ankerlochs zugewandten Außenseite in radialer Richtung zum Spreizanker aufweist, wodurch zum einen große Durchmessertoleranzen eines Ankerlochs ausgeglichen werden und eine Haltekraft des Bremsschuhs in einem Ankerloch möglich ist, gegen die sich der Spreizanker von Hand in das Ankerloch einbringen lässt und trotzdem gegen ein Herausfallen auch aus einem senkrecht nach oben gehenden Ankerloch durch sein eigenes Gewicht hält.

Damit sich der Spreizanker mit geringer Kraft in ein Ankerloch einbringen lässt, sieht eine Ausgestaltung der Erfindung vor, dass eine Vorderseite des Bremsschuhs entgegen einer Einbringrichtung des Spreizankers in ein Ankerloch schräg nach außen verläuft.

Dabei bedeutet "schräg" nicht zwingend gerade, sondern die Vorderseite des Bremsschuhs kann beispielsweise auch konvex oder konkav bogenförmig entgegen der Einbringrichtung des Spreizankers in ein Ankerloch schräg nach außen verlaufen. Die Vorderseite des Bremsschuhs ist die Seite, die in die Einbringrichtung weist, die sich also beim Einbringen des Spreizankers in ein Ankerloch vorn befindet. Es genügt, wenn die Vorderseite des Bremsschuhs außerhalb der Spreizhülse entgegen der Einbringrichtung schräg nach außen verläuft.

In bevorzugter Ausgestaltung der Erfindung besteht auf einer der Einbringrichtung des Spreizankers in ein Ankerloch abgewandten Seite des Bremsschuhs ein Freiraum zwischen dem Bremsschuh und dem Rand der Aussparung der Spreizhülse, in die sich der Bremsschuh hinein verformen kann, wenn er beim Einbringen in ein Ankerloch verformt wird. Das erleichtert ein Verformen des Bremsschuhs beim Einbringen des Spreizankers in ein Ankerloch und verringert eine Kraft, die zum Einbringen des Spreizankers in ein Ankerloch notwendig ist. Insbesondere liegt der Bremsschuh innen an einer Wand beziehungsweise an einem Rand der Aussparung an, insbesondere umlaufend flächig an einer Wand beziehungsweise an einem Rand der Aussparung, so dass der Freiraum außen angeordnet ist. In diesem Bereich liegt der Bremsschuh zumindest teilweise nicht an der Wand beziehungsweise dem Rand der Aussparung an.

Eine Ausgestaltung der Erfindung sieht vor, dass der Bremsschuh in der Aussparung der Spreizhülse in und/oder entgegen einer Einbringrichtung des Spreizankers in ein Ankerloch beweglich ist. Das ermöglicht, dass sich die Spreizhülse in und/oder entgegen der Einbringrichtung gegenüber dem Bremsschuh bewegt. Dadurch kann beim Einbringen des erfindungsgemäßen Spreizankers in ein Ankerloch der Bremsschuh von einer Lochwand des Ankerlochs rückgehalten werden, während sich der Ankerschaft und die Spreizhülse in der Einbringrichtung in das Ankerloch hinein bewegen. Das kann eine zum Einbringen des Spreizankers in ein Ankerloch notwendige Kraft verringern.

Vorzugsweise weist der Bremsschuh einen Flansch zwischen der Spreizhülse und dem Ankerschaft auf, der den Rand der Aussparung der Spreizhülse von innen hintergreift. Dies ermöglicht einen einfachen Aufbau des Bremsschuhs.

Für eine leichtere Verformbarkeit und/oder eine größere Verformungsamplitude des Bremsschuhs sieht eine Ausgestaltung der Erfindung eine Höhlung des Bremsschuhs vor. Der Bremsschuh kann beispielsweise einen festen, elastisch und/oder plastisch verformbaren Schaum oder einen Hohlraum aufweisen und/oder bogenförmig oder gewölbeartig gestaltet sein. Auch diese Ausgestaltung der Erfindung dient einer leichten Einbringbarkeit des erfindungsgemäßen Spreizankers in ein Ankerloch bei trotzdem ausreichendem Halt des Spreizankers in dem Ankerloch gegen ein Herausfallen. Außerdem ermöglicht diese Ausgestaltung der Erfindung eine große Durchmessertoleranz eines Ankerlochs.

Der Bremsschuh des erfindungsgemäßen Spreizankers besteht beispielsweise aus einem Kunststoff, insbesondere aus einem Elastomer.

Eine Ausgestaltung der Erfindung sieht einen kuppelförmigen, pyramidenförmigen oder kegelförmigen, auch pyramidenstumpfförmigen oder kegelstumpfförmigen Bremsschuh vor.

Die Erfindung wird nachfolgend anhand zweier in der Zeichnung dargestellter Ausführungsbeispiele näher erläutert. Es zeigen:
- Figur 1: eine perspektivische Explosionsdarstellung eines Spreizankers gemäß der Erfindung;
- Figur 2: einen vergrößerten Achsschnitt eines Abschnitts des Spreizankers aus Figur 1; und
- Figur 3: eine abgewandelte Ausführung einer Spreizhülse für den erfindungsgemäßen Spreizanker in perspektivischer Darstellung.

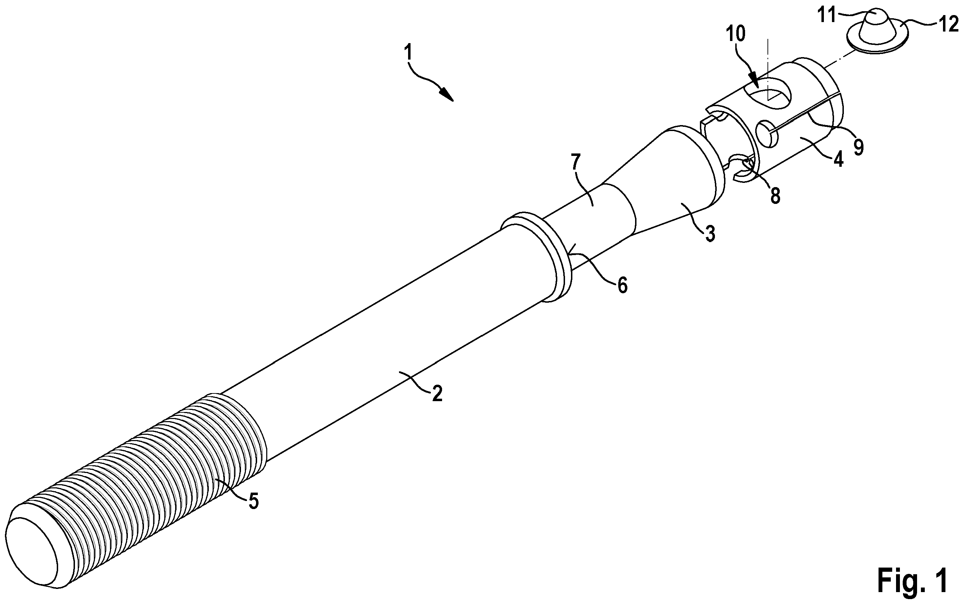

Der in Figur 1 dargestellte, erfindungsgemäße Spreizanker 1 weist einen stabförmigen, zylindrischen Ankerschaft 2, einen Spreizkörper 3 und eine auf dem Ankerschaft 2 angeordnete Spreizhülse 4 auf. Der Ankerschaft 2 weist ein Gewinde 5 an einem Ende und den Spreizkörper 3 an einem anderen Ende auf. Der Spreizkörper 3 ist kegelstumpfförmig, einstückig mit dem Ankerschaft 2 verbunden, und erweitert sich in Einbringrichtung.

Mit Abstand vom Spreizkörper 3 weist der Ankerschaft 2 eine umlaufende Ringstufe auf, an der der Ankerschaft 2 einen Durchmesser in Richtung des Spreizkörpers 3 verkleinert. Die Ringstufe bildet ein axiales Widerlager 6 für die Spreizhülse 4. Zwischen dem Spreizkörper 3 und dem Widerlager 6 weist der Ankerschaft 2 einen zylindrischen Schaftabschnitt 7 auf, dessen Durchmesser kleiner als ein Durchmesser des Ankerschafts 2 auf einer dem Gewinde 5 zugewandten Seite des Widerlagers 6 ist.

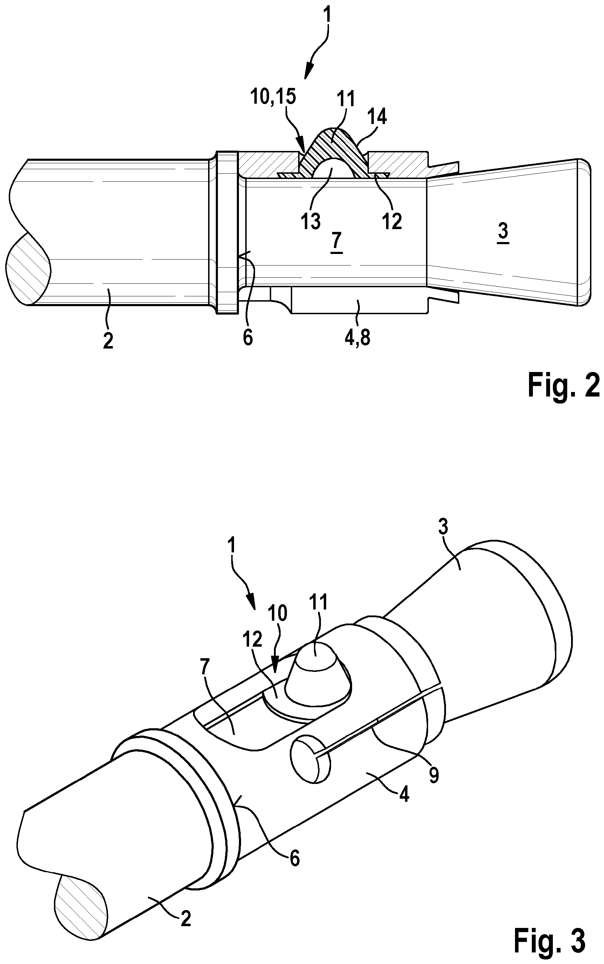

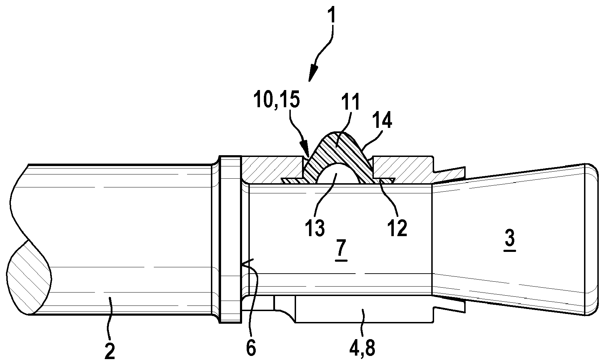

Die Spreizhülse 4 ist zwischen dem Spreizkörper 3 und dem Widerlager 6 auf dem Schaftabschnitt 7 des Ankerschafts 2 angeordnet und kann, wie in Figur 2 zu sehen, ein kurzes Stück auf den Spreizkörper 3 ragen. Die Spreizhülse 4 ist aus Blech gestanzt und rohrförmig zu einer Hülse gebogen. In Figur 1 ist sie axial vor dem Spreizkörper 3 gezeichnet.

Zum Aufweiten bzw. Aufspreizen der Spreizhülse 4 lässt sich der Spreizkörper 3 mittels des Ankerschafts 2 in die Spreizhülse 4 einziehen oder umgekehrt die Spreizhülse 4 auf den Spreizkörper 3 schieben. Das Aufweiten der Spreizhülse 4 wird als Aufspreizen bezeichnet. Um die Spreizhülse 4 aufzuweiten, das heißt aufspreizen zu können, weist die Spreizhülse 4 einen herstellungsbedingt durch das Biegen eines Blechs zu der rohrförmigen Hülse durchgehenden Längsschlitz 8 und eine Anzahl durch Stanzen hergestellter, nicht durchgehender Längsschlitze 9 auf, die an einem dem Spreizkörper 3 zugewandten Ende der Spreizhülse 4 beginnen und sich über etwa 2/3 bis 3/4 einer axialen Länge der Spreizhülse 4 erstrecken.

Die Spreizhülse 4 des erfindungsgemäßen Spreizankers 1 weist an einer Stelle ein gestanztes oder in anderer Weise hergestelltes Loch auf, das eine Aussparung 10 der Spreizhülse 4 bildet. In Figuren 1 und 2 ist die Aussparung 10 kreisförmig, es sind allerdings auch andere Formen möglich.

Bevor die Spreizhülse 4 auf den Schaftabschnitt 7 des Ankerschafts 2 aufgesetzt wird, wird ein Bremsschuh 11 von innen in die Aussparung 10 eingesetzt. "Innen" meint eine dem Schaftabschnitt 7 des Ankerschafts 2 zugewandte Innenseite oder Innenumfang der Spreizhülse 4. Im Ausführungsbeispiel ist der Bremsschuh 11 kegelförmig mit einer kugelförmigen "Spitze" und einem umlaufenden und radial überstehenden Flansch 12 an einer Grundseite des Kegels und besteht aus einem Elastomer. Für eine leichtere Verformbarkeit kann der Bremsschuh 11 eine Höhlung 13 aufweisen. Die beschriebene und gezeichnete Form des Bremsschuhs 11 ist nicht zwingend für die Erfindung, aber vorteilhaft, da er einen einfachen Aufbau bei einer gute Wirkung ermöglicht.

Mit dem Flansch 12 hintergreift der Bremsschuh 11 einen Rand der Aussparung 10 der Spreizhülse 4 von innen, so dass der Bremsschuh 11 nicht nach außen aus der Aussparung 10 der Spreizhülse 4 herausfällt. Von innen ist der Bremsschuh 11 vom Schaftabschnitt 7 des Ankerschafts 2 des Spreizankers 1 gehalten, so dass der Bremsschuh 11 auch nicht nach innen aus der Aussparung 10 der Spreizhülse 4 herausfallen kann. Wie in Figur 2 zu sehen, steht der Bremsschuh 11 bereits im unverspreizten Zustand nach außen über die Spreizhülse 4 über. "Nach außen" bedeutet vom Schaftabschnitt 7 weg. In einer Umfangsrichtung und einer Längsrichtung der Spreizhülse 4 wird der Bremsschuh 11 vom Rand der Aussparung 10 gehalten, wobei anders als gezeichnet Spiel möglich ist.

Zu einer als Verankerung bezeichneten Befestigung in einem nicht gezeichneten, zylindrischen Ankerloch wird der Spreizanker 1 mit dem Spreizkörper 3 voraus in das Ankerloch eingebracht, so dass sich die Spreizhülse 4 vollständig im Ankerloch befindet. Weil der Bremsschuh 11 nach außen über die Spreizhülse 4 übersteht, liegt er im Ankerloch an einer Lochwand des Ankerlochs an und hält den Spreizanker 1 im Ankerloch. Das gilt auch im Falle einer Überkopfmontage in einem senkrecht nach oben gehenden Ankerloch.

Durch Aufdrehen einer nicht gezeichneten Mutter, die sich an einer Mündung des Ankerlochs abstützt, auf das Gewinde 5 des Ankerschafts 2 wird über den Ankerschaft 2 der Spreizkörper 3 in die Spreizhülse 4 eingezogen und spreizt durch seine Kegelform die Spreizhülse 4 auf, wodurch der Spreizanker 1 im Ankerloch verankert wird bzw. ist. Der Bremsschuh 11, der außen an der Lochwand des Ankerlochs und innen am Schaftabschnitt 7 des Ankerschafts 2 des Spreizankers 1 anliegt, hält den Ankerschaft 2 gegen Mitdrehen mit der Mutter.

Durch seine Kegelform verläuft der Bremsschuh 11 schräg zur Spreizhülse 4 nach außen. An einer Vorderseite 14 verläuft der Bremsschuh 11 schräg entgegen einer Einbringrichtung des Spreizankers 1 in ein Ankerloch nach außen. Mit "Vorderseite 14 " ist ein Umfangsabschnitt des Bremsschuhs 11 gemeint, die in der Einbringrichtung des Spreizankers 1 in ein Ankerloch nach vorn weist. Als Vorderseite 14 kann auch eine beim Einbringen des Spreizankers 1 in ein Ankerloch vordere Mantellinie des Bremsschuhs 11 bezeichnet werden. Eine schräg entgegen der Einbringrichtung des Spreizankers 1 in ein Ankerloch nach außen gerichtete Vorderseite 14 lässt sich auch mit anderen Formen des Bremsschuhs 11 verwirklichen (nicht dargestellt). Die schräg entgegen der Einbringrichtung des Spreizankers 1 in ein Ankerloch nach außen gerichtete Vorderseite 14 des Bremsschuhs 11 erleichtert das Einbringen des Spreizankers 1 in ein Ankerloch.

Durch die Kegelform des Bremsschuhs 11 besteht ein umlaufender Freiraum 15 zwischen dem Bremsschuh 11 und dem Rand der Aussparung 10 der Spreizhülse 4, in die der Bremsschuh 11 auf einer der Einbringrichtung des Spreizankers 1 in ein Ankerloch abgewandten Rückseite des Bremsschuhs 11 hinein verformt wird. Der Freiraum 15 zwischen dem Bremsschuh 11 und dem Rand der Aussparung 10 der Spreizhülse 4 auf der der Einbringrichtung des Spreizankers 1 in ein Ankerloch abgewandten Rückseite des Bremsschuhs 11 erleichtert eine Verformung des Bremsschuhs 11 und erleichtert dadurch das Einbringen des Spreizankers 1 in ein Ankerloch.

Bei der in Figur 3 gezeichneten Abwandlung der Spreizhülse 4 ist die Aussparung 10 der Spreizhülse 4, in die der Bremsschuh 11 eingesetzt ist, ein in Längsrichtung der Spreizhülse 4 verlaufendes Langloch. Der Bremsschuh 11 ist unverändert kegelförmig und hintergreift mit dem Flansch 12 den Rand der Aussparung 10 der Spreizhülse 4 von innen. Durch die Ausbildung der Aussparung 10 als ein in Längsrichtung der Spreizhülse 4 verlaufendes Langloch sind die Spreizhülse 4 und der Bremsschuh 11 in der Längsrichtung gegeneinander beweglich. In einem Auslieferungszustand des Spreizankers 1 vor dem Aufspreizen der Spreizhülse 4 ist bzw. wird der Bremsschuh 11 an einem vorderen, dem Spreizkörper 3 nahen Ende in der Aussparung 10 angeordnet. Bei einem Einbringen des Spreizankers 1 in ein Ankerloch bewegt sich die Spreizhülse 4 durch ihre Anlage an dem Widerlager 6 des Ankerschafts 2 mit dem Ankerschaft 2 mit. Der Bremsschuh 11 kann von einer Lochwand des Ankerlochs rückgehalten werden, so dass er sich nicht mit dem Ankerschaft 2 und der Spreizhülse 4 mitbewegt. Durch seine Anlage an der Lochwand des Ankerlochs und am Schaftabschnitt 7 des Ankerschafts 2 hält der Bremsschuh 11 den Spreizanker 1 trotzdem auch in einem senkrecht nach oben gehenden Ankerloch, wenn die Spreizhülse 4 (noch) nicht aufgespreizt ist.

### Bezugszeichenliste

### Spreizanker

- 1: Spreizanker
- 2: Ankerschaft
- 3: Spreizkörper
- 4: Spreizhülse
- 5: Gewinde
- 6: Widerlager
- 7: Schaftabschnitt
- 8: durchgehender Längsschlitze
- 9: nicht durchgehender Längsschlitz
- 10: Aussparung
- 11: Bremsschuh
- 12: Flansch
- 13: Höhlung
- 14: Vorderseite
- 15: Freiraum

## Patentansprüche

1. Spreizanker (1), mit einem Ankerschaft (2), mit einer auf dem Ankerschaft (2) angeordneten Spreizhülse (4), und mit einem Spreizkörper (3), der mit dem Ankerschaft (2) verbunden und in Bezug zu der Spreizhülse (4) in einer Längsrichtung des Ankerschafts (2) beweglich ist, wobei durch Einziehen des Spreizkörpers (3) in die Spreizhülse (4) die Spreizhülse (4) aufspreizbar ist, **dadurch gekennzeichnet, dass** die Spreizhülse (4) eine Aussparung (10) aufweist, in die von innen ein Bremsschuh (11) eingesetzt ist, der im unverspreizten Zustand nach außen über die Spreizhülse (4) übersteht.

2. Spreizanker nach Anspruch 1, **dadurch gekennzeichnet, dass**, der Bremsschuh (11) von dem Ankerschaft (2) von innen in der Aussparung (10) gehalten wird.

3. Spreizanker nach Anspruch 1 oder 2, **dadurch gekennzeichnet, dass** der Bremsschuh (11) einen Rand der Aussparung (10) der Spreizhülse (4) von innen hintergreift, so dass der Bremsschuh (11) nicht nach außen aus der Aussparung (10) heraus fällt.

4. Spreizanker nach einem der vorhergehenden Ansprüche, **dadurch gekennzeichnet, dass** eine Vorderseite (14) des Bremsschuhs (11), die sich in einer Einbringrichtung des Spreizankers (1) in ein Ankerloch vorn am Bremsschuh (11) befindet, außerhalb der Spreizhülse (4) schräg in einer der Einbringrichtung entgegengesetzten Richtung nach außen verläuft.

5. Spreizanker nach einem der vorhergehenden Ansprüche, **dadurch gekennzeichnet, dass** die Aussparung (10) der Spreizhülse (4), in die der Bremsschuh (11) eingesetzt ist, auf einer einer Einbringrichtung des Spreizankers (1) in ein Ankerloch abgewandten Seite einen Freiraum (15) zwischen dem Bremsschuh (11) und dem Rand der Aussparung (10) aufweist.

6. Spreizanker nach einem der vorhergehenden Ansprüche, **dadurch gekennzeichnet, dass** der Bremsschuh (11) in der Aussparung (10) der Spreizhülse (4) in und/oder entgegen einer Einbringrichtung des Spreizankers (1) in ein Ankerloch beweglich ist.

7. Spreizanker nach einem der vorhergehenden Ansprüche, **dadurch gekennzeichnet, dass** der Bremsschuh (11) einen Flansch (12) zwischen der Spreizhülse (4) und dem Ankerschaft (2) aufweist, der den Rand der Aussparung (10) der Spreizhülse (2) von innen hintergreift.

8. Spreizanker nach einem der vorhergehenden Ansprüche, **dadurch gekennzeichnet, dass** der Bremsschuh (11) eine Höhlung (13) aufweist.

9. Spreizanker nach einem der vorhergehenden Ansprüche, **dadurch gekennzeichnet, dass** der Bremsschuh (11) aus einem Kunststoff, insbesondere aus einem Elastomer besteht.

10. Spreizanker nach einem der vorhergehenden Ansprüche, **dadurch gekennzeichnet, dass** der Bremsschuh (11) kuppelförmig, pyramidenförmig oder kegelförmig ist.
